# EUROPEAN PATENT SPECIFICATION

(11) **EP 3 572 946 B1**
(45) Date of publication and mention of the grant of the patent: **07.12.2022**
(21) Application number: 17899829.0
(22) Date of filing: 08.03.2017
(51) Int. Cl.: G06F 12/08, G06F 12/12, G06F 11/34, G06F 12/0811, G06F 12/126, G06F 12/128, G06F 11/30

(54) **CACHE REPLACEMENT METHOD, DEVICE, AND SYSTEM**
VERFAHREN, VORRICHTUNG UND SYSTEM ZUM ERSATZ EINES CACHESPEICHERS
PROCÉDÉ, DISPOSITIF ET SYSTÈME DE REMPLACEMENT EN CACHE

(43) Date of publication of application: 27.11.2019
(73) Proprietor: Huawei Technologies Co., Ltd., Longgang District Shenzhen, Guangdong 518129 (CN)
(72) Inventor: YU, Jiyang, Shenzhen Guangdong 518129 (CN); FANG, Lei, Shenzhen Guangdong 518129 (CN); CAI, Weiguang, Shenzhen Guangdong 518129 (CN)
(74) Representative: Gill Jennings & Every LLP
(86) International application number: PCT/CN2017/075952
(87) International publication number: WO 2018/161272

(56) References cited:
- CN-A- 1 940 892
- CN-A- 103 885 890
- CN-A- 105 930 282
- US-A1- 2006 143 400
- US-A1- 2007 168 617
- US-A1- 2008 082 754
- US-A1- 2009 106 496
- US-A1- 2014 280 206
- US-A1- 2016 055 100

## Description

### TECHNICAL FIELD

This application relates to the computer field, and in particular, to a cache replacement method, apparatus, and system.

### BACKGROUND

A processor usually uses a plurality of levels of CPU caches (cache) to reduce overheads (time or energy) of accessing data from a primary storage (primary storage) (for example, a system memory). There are usually three types of relationships between the plurality of levels of caches: "inclusive" (inclusive), "exclusive" (exclusive), and "non-inclusive" (non-inclusive) between "inclusive" and "exclusive". "Inclusive" means that each cache line (cache line) in a high-level cache has a corresponding cache line (with a same identifier) in a low-level cache. "Exclusive" means that a cache line in a high-level cache and a cache line in a low-level cache are mutually exclusive. "Non-inclusive" is a compromise between "inclusive" and "exclusive", and means that some cache lines in a high-level cache are the same as some cache lines in a low-level cache.

In an inclusive cache, data in a high-level cache is a subset of data in a low-level cache. If a cache line in the low-level cache is evicted (evict), to maintain an inclusion relationship, back invalidation (back invalidation) is performed on a corresponding cache line in the high-level cache.

For a data cache, to maintain a coherence protocol, the inclusion relationship may be applied between a low-level cache and a high-level cache. An L1 cache and an L2 cache are used as an example. When the L2 cache includes the L1 cache, if a cache line in the L1 cache is frequently accessed, the cache line is usually stored in the L1 cache for a relatively long time, and no cache miss (cache miss) occurs. However, the L2 cache does not know use of cache lines in the L1 cache. The L2 cache can learn which data needs to be accessed from the L1 cache only when a cache miss occurs in the L1 cache. If a cache line is frequently accessed from the L1 cache and no cache miss occurs, a cache line, corresponding to the frequently accessed cache line, in the L2 cache is evicted from the L2 cache through replacement according to a replacement policy of the L2 cache because the cache line has not been used for a long time. Replacement of the cache line in the L2 cache further triggers back invalidation of the corresponding cache line in the L1 cache. Back invalidation of frequently accessed data in the L1 cache further causes a cache miss in the L1 cache. Consequently, system performance is affected.

Document US 2007/168617 discloses a computer system having patrol snoop sequencer that sequences through addresses of cache lines held in a higher level cache, making snoop reads using those addresses to a lower level cache.

Document US US2016/0055100 discloses a processing system having multilevel cache employs techniques for identifying and selecting valid candidate cache lines for eviction.

### SUMMARY

In view of this, this application discloses a cache replacement method, apparatus, and system, to reduce a possibility of back invalidation of a frequently accessed cache line in a high-level cache by monitoring access to the high-level cache. The present invention is defined in the appended claims.

### BRIEF DESCRIPTION OF DRAWINGS

FIG. 1 is a schematic diagram of a logical structure of a data processing system according to an embodiment of the present invention;
FIG. 2A and FIG. 2B are a schematic diagram of a cache structure according to an embodiment of the present invention;
FIG. 3 is an example flowchart of a cache replacement method according to an embodiment of the present invention;
FIG. 4 is an example flowchart of a cache replacement method according to an embodiment of the present invention;
FIG. 5A and FIG. 5B are an example flowchart of a cache replacement method according to an embodiment of the present invention;
FIG. 6 is a schematic diagram of a logical structure of a cache replacement system according to an embodiment of the present invention;
FIG. 7 is a schematic diagram of a logical structure of a cache replacement apparatus according to an embodiment of the present invention; and
FIG. 8 is a schematic diagram of a logical structure of a cache replacement apparatus according to an embodiment of the present invention.

### DESCRIPTION OF EMBODIMENTS

The following describes embodiments of the present invention with reference to accompanying drawings.

In a conventional cache replacement policy, a to-be-replaced cache line may be selected from a low-level cache according to a least recently used policy. A first cache line is in the low-level cache (for example, an L2 cache). A corresponding cache line of the first cache line is in a high-level cache (for example, an L1 cache). The corresponding cache line of the first cache line is a cache line the same as the first cache line, and the first cache line and the corresponding cache line of the first cache line include same data and correspond to a same access address. If a processor frequently accesses data corresponding to the first cache line, a cache hit (cache hit) on the corresponding cache line of the first cache line frequently occurs in the L1 cache. Data corresponding to a cache line is memory data included in the cache line. The first cache line and the corresponding cache line of the first cache line include the same data. If the corresponding cache line of the first cache line is frequently hit in the L1 cache, according to the LRU policy, the corresponding cache line of the first cache line stays in the L1 cache, and the first cache line in the L2 cache is not accessed. If the first cache line in the L2 cache has not been accessed for a period of time, according to the LRU replacement policy, a risk of replacing the first cache line in the L2 cache is gradually increased. After the first cache line in the L2 cache is determined as the to-be-replaced cache line, when a cache miss occurs in the L2 cache, the first cache line needs to be evicted from the L2 cache, and to ensure an inclusion relationship, back invalidation is performed on the corresponding cache line, in the L1 cache, of the first cache line. If the data corresponding to the first cache line is frequently accessed data in the L1 cache, a cache miss on the corresponding cache line of the first cache line occurs soon in the L1 cache, and the data corresponding to the first cache line needs to be rewritten into the L2 cache and the L1 cache. Consequently, overall system performance is affected.

To resolve the foregoing problem, in the technical solutions disclosed in the embodiments of the present invention, after a first cache line in a low-level cache is determined as a to-be-replaced cache line, a processor monitors whether a cache hit on a corresponding cache line of the first cache line occurs in a high-level cache. If the hit on the corresponding cache line of the first cache line occurs in the high-level cache before the first cache line is replaced because a cache miss occurs in the low-level cache, the corresponding cache line of the first cache line may be frequently accessed from the high-level cache according to time and space characteristics of cache access. Therefore, the first cache line is retained in the low-level cache, and a second cache line is newly selected as the to-be-replaced cache line. Back invalidation of the corresponding cache line of the first cache line is avoided, the corresponding cache line of the first cache line stays in the high-level cache, and a high overall cache hit rate is ensured. If the high-level cache includes the corresponding cache line of the first cache line, and the cache hit on the corresponding cache line of the first cache line does not occur in the high-level cache before a cache miss occurs in the low-level cache, it indicates that the corresponding cache line of the first cache line is not frequently accessed from the high-level cache. Therefore, when the cache miss occurs in the low-level cache, the first cache line is evicted from the low-level cache through replacement, and back invalidation is performed on the corresponding cache line, in the high-level cache, of the first cache line. In the embodiments of the present invention, evicting the first cache line from the low-level cache through replacement includes evicting the first cache line from the low-level cache, and writing a missing cache line into the low-level cache.

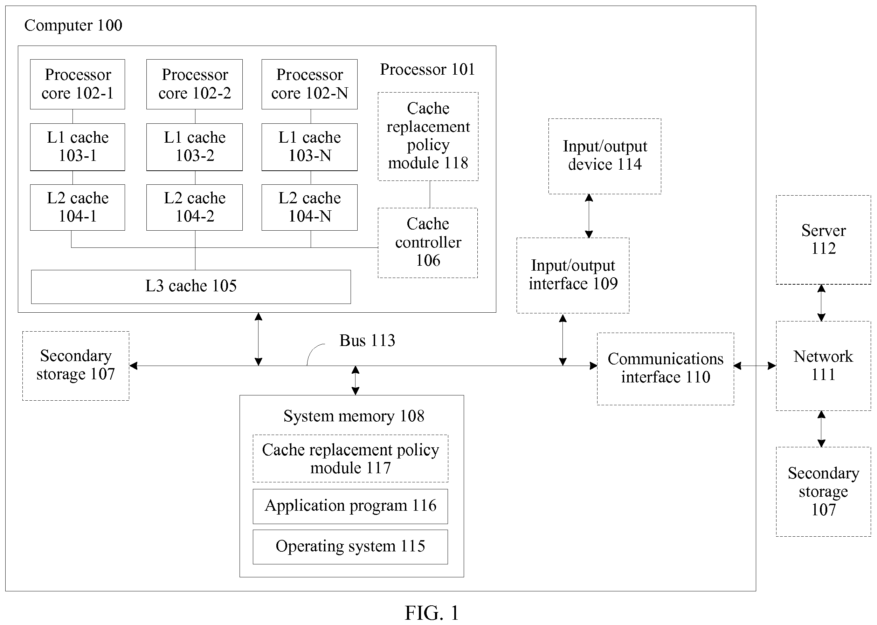

FIG. 1 is a schematic structural diagram of a computer 100 according to an embodiment of the present invention. The computer may be any electronic device, for example, a portable computer, a desktop computer, a server, a network device, a tablet computer, a mobile phone, a personal digital assistant (personal digital assistant, PDA), a wearable device, or any combination thereof.

As shown in FIG. 1, the data processing system 100 includes a processor 101. The processor 101 is connected to a system memory 108. The processor 101 may be a central processing unit (CPU), a graphics processing unit (English: graphics processing unit, GPU), or a digital signal processor (English: digital signal processor, DSP).

The processor 101 may be a single-core processor or a multi-core processor, and includes two or more levels of caches. In this embodiment of the present invention, the processor 101 includes a plurality of processor cores 102 (including a processor core 102-1, a processor core 102-2, and a processor core 102-N, which are collectively referred to as the processor core 102) and a three-level cache architecture. An L1 cache 103 (including an L1 cache 103-1, an L1 cache 103-2, and an L1 cache 103-N, which are collectively referred to as the L1 cache 103) and an L2 cache 104 (including an L2 cache 104-1, an L2 cache 104-2, and an L2 cache 104-N, which are collectively referred to as the L2 cache 104) are private caches. An L3 cache 105 is a shared cache. The private caches can be used only by corresponding processor cores, and the shared cache can be shared among the plurality of processor cores. The L1 cache 103 is a high-level cache relative to the L2 cache 104 and the L3 cache 105. The L2 cache is a high-level cache relative to the L3 cache. The L2 cache 104 and the L3 cache 105 are low-level caches relative to the L1 cache 103. The L3 cache 105 is a low-level cache relative to the L2 cache 104. In this embodiment of the present invention, a low-level cache and a high-level cache are in an inclusion relationship, and each cache line in the high-level cache is also in a corresponding low-level cache.

The processor 101 may further include a cache controller 106. The cache controller 106 is configured to select a corresponding data unit (cache line) based on different types of message requests and address information corresponding to the requests, and perform an operation such as reading, updating, or padding on the data unit. During a specific implementation, each level of cache may have its own control logic, to be specific, cache controllers 106 shown in FIG. 1 may be distributedly deployed in different levels of caches; or one cache architecture may have overall control logic. This is not limited in this embodiment of the present invention. The cache controller 106 may be integrated into the processor 101 as an independent component, or may be integrated into the processor core 102, and the processor core 102 implements a function of the cache controller 106.

In an embodiment of the present invention, the processor 101 may further include a cache replacement policy module 118. The cache replacement policy module 118 is a firmware module integrated into the processor 101. The processor 101 or the cache controller 106 executes firmware code in the cache replacement policy module 118 to implement the technical solutions in the embodiments of the present invention. The cache replacement policy module 118 includes: (1) code for selecting a first cache line in a low-level cache as a to-be-replaced cache line; (2) code for monitoring whether a cache hit on a corresponding cache line of the first cache line occurs in a high-level cache after the first cache line in the low-level cache is selected as the to-be-replaced cache line and before the first cache line is replaced because a cache miss occurs in the low-level cache; and (3) code for retaining the first cache line in the low-level cache and selecting a second cache line as the to-be-replaced cache line if the cache hit on the corresponding cache line of the first cache line occurs in the high-level cache before a cache miss occurs in the low-level cache.

A bus 113 is configured to transfer information between components of the data processor system 100. The bus 113 may implement communication in a wired or wireless manner. This is not limited in this application. The bus 113 may be further connected to a secondary storage (secondary storage) 107, an input/output interface 109, and a communications interface 110.

A storage medium of the secondary storage 107 may be a magnetic medium (for example, a floppy disk, a hard disk, or a magnetic tape), an optical medium (for example, an optical disc), a semiconductor medium (for example, a solid state disk (solid state disk, SSD)), or the like. In some embodiments, the secondary storage 107 may further include a remote storage separated from the processor 101, for example, a web disk (including a network or cluster file system such as a network file system (NFS)) that accesses a communications network 111 by using the communications interface 110 and a network storage protocol.

The input/output interface 109 connected to an input/output device 114 is configured to receive input information and output an operation result. The input/output device 114 may be a mouse, a keyboard, a display, an optical drive, or the like.

The communications interface 110 implements communication with another device or the communications network 111 by using, for example but not limited to, a transceiver apparatus such as a transceiver. The communications interface 110 may be interconnected with the network 111 in a wired or wireless manner. The network 111 may be the Internet, an intranet (intranet), a local area network (local area network, LAN), a wide area network (wide area network, WAN), a storage area network (storage area network, SAN), or any combination of these networks.

Some features of the embodiments of the invention may be completed/supported by the processor 101 by executing software code in the system memory 108. The system memory 108 may include some software, for example, an operating system 115 (for example, Darwin, RTXC, Linux, Unix, OS X, Windows, or an embedded operating system (for example, Vxworks)), an application program 116, and a cache replacement policy module 117.

In an embodiment of the present invention, the processor 101 or the cache controller 106 executes the cache replacement policy module 117 to implement the technical solutions in the embodiments of the present invention. The cache replacement policy module 117 includes: (1) code for selecting a first cache line in a low-level cache as a to-be-replaced cache line; (2) code for monitoring whether a cache hit on a corresponding cache line of the first cache line occurs in a high-level cache after the first cache line in the low-level cache is selected as the to-be-replaced cache line and before the first cache line is actually replaced because a cache miss occurs in the low-level cache; and (3) code for retaining the first cache line in the low-level cache and selecting a second cache line as the to-be-replaced cache line if the cache hit on the corresponding cache line of the first cache line occurs in the high-level cache before a cache miss occurs in the low-level cache.

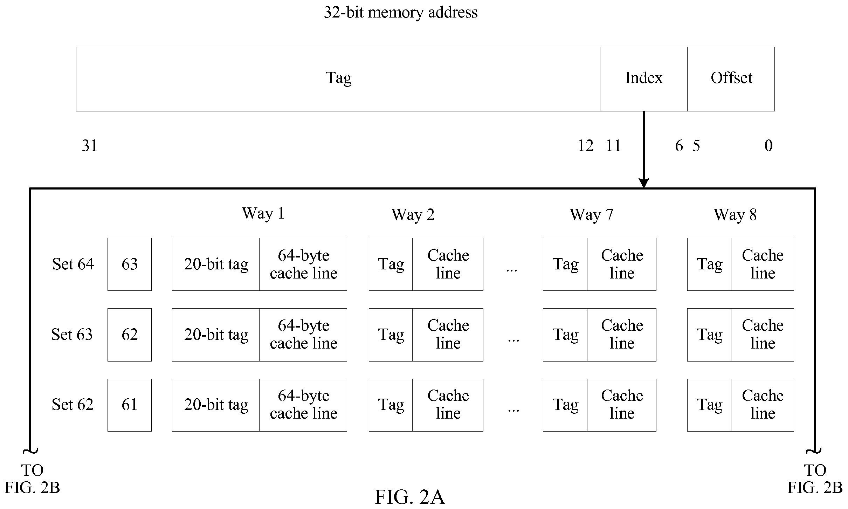

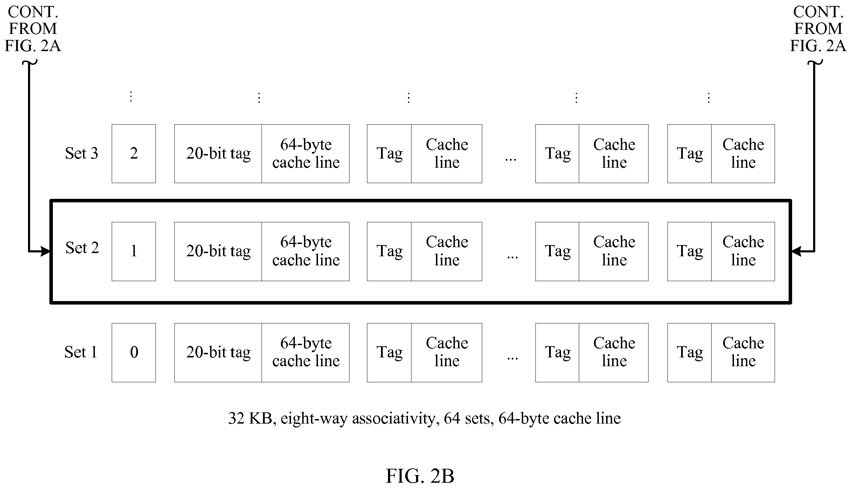

FIG. 2A and FIG. 2B are a schematic diagram of a cache structure according to an embodiment of the present invention. During cache access, a memory address is divided into three segments: a tag, an index, and an offset. When accessing data, a processor first searches a cache according to the memory address to determine whether the cache includes data corresponding to the memory address, and if a hit occurs, directly reads the data from the cache. If the cache does not include the data corresponding to the memory address, the processor obtains, from a memory, the data corresponding to the memory address, and writes the obtained data into the cache. As shown in FIG. 2A and FIG. 2B, the memory address includes 32 bits (bit); the cache has a capacity of 32 kilobytes (kilobyte, KB), includes 64 sets, and is eight-way set associative (in other words, each set includes eight cache lines); and each cache line includes 64 bytes (byte) in size.

Offset: An operation is performed in a unit of cache lines in the cache, and an internal address, in a cache line, of data needs to be determined by using an offset. The cache line includes 64 bytes, and the offset may be indicated by using six least significant bits of the address.

Index: The index is used to find a set to which the cache line belongs. In FIG. 2A and FIG. 2B, the cache includes 64 sets in total, and six middle bits of the address may be used to search for a set to which the address belongs.

Tag: During cache access, a set to which an access address belongs is first determined based on the index, and then each tag in the set is compared with a tag of the access address. If there is a same tag, it indicates a cache hit. If there is no same tag, a cache miss occurs. In FIG. 2A and FIG. 2B, after the set is found based on the index, each tag (remaining bits in the address, to be specific, 20 most significant bits of the address in FIG. 2A and FIG. 2B) in eight cache lines in the set is compared with the tag of the access address.

A cache line can be uniquely determined based on a tag and an index.

It should be understood that, FIG. 2A and FIG. 2B merely describe the cache structure by using an example, and an actual specification of the cache is not limited in this embodiment of the present invention.

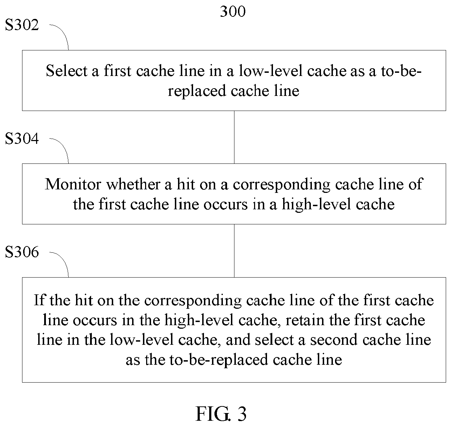

FIG. 3 is a flowchart of a cache replacement method 300 according to an embodiment of the present invention. The method 300 is applied to a computer system including a high-level cache and a low-level cache. The low-level cache and the high-level cache are in an inclusion relationship. To be specific, corresponding cache lines of all cache lines in the high-level cache are in the low-level cache. As shown in FIG. 3, the method 300 includes the following steps.

S302: A processor selects a first cache line in the low-level cache as a to-be-replaced cache line.

When the low-level cache is full and a cache miss occurs, the processor cannot find a blank space to store a missing cache line, and needs to use a space in which a cache line has been stored, in other words, replaces an existing cache line in the low-level cache with a new cache line.

The to-be-replaced cache line is replaced, when a cache miss occurs in the low-level cache, with a missing cache line. In other words, when a cache miss occurs in the low-level cache, the to-be-replaced cache line is evicted from the low-level cache, to release a space for a missing cache line.

In this embodiment of the present invention, a cache algorithm for selecting the first cache line in the low-level cache as the to-be-replaced cache line is not limited. The cache algorithm may be an algorithm such as first in first out (first in first out, FIFO), last in first out (last in first out, LIFO), LRU, pseudo-LRU (pseudo-LRU, PLRU), random replacement (random replacement, RR), segmented LRU (segmented LRU, SLRU), least frequently used (least frequently used, LFU), LFU with dynamic aging (LFU with dynamic aging, LFUDA), low inter-reference recency set (low inter-reference recency set, LIRS), adaptive replacement cache (adaptive replacement cache, ARC), or multi-queue (multi-queue, MQ).

For example, the processor may select the first cache line in the low-level cache as the to-be-replaced cache line according to an LRU policy.

S304: The processor monitors whether a cache hit on a corresponding cache line of the first cache line occurs in the high-level cache.

After selecting the first cache line in the low-level cache as the to-be-replaced cache line, the processor monitors whether the cache hit on the corresponding cache line of the first cache line occurs in the high-level cache. According to time and space characteristics of cache access, if data corresponding to the first cache line is frequently accessed data (hot data) in the high-level cache, before a subsequent cache miss occurs in the low-level cache, the corresponding cache line of the first cache line is hit in the high-level cache at a high probability.

If a cache miss occurs in the high-level cache, but the low-level cache includes a cache line corresponding to a missing cache line in the high-level cache, data corresponding to the missing cache line may be directly written into the high-level cache. In this case, no cache miss occurs in the low-level cache. A cache miss occurs in the low-level cache only when a cache miss occurs in the high-level cache and the low-level cache does not include a cache line corresponding to a missing cache line in the high-level cache. Because the high-level cache has a smaller space than the low-level cache, if the corresponding cache line of the first cache line is frequently accessed data in the high-level cache, before a cache miss occurs in the low-level cache, the corresponding cache line of the first cache line is hit in the high-level cache at a high probability.

In this embodiment of the present invention, a cache line in a monitored state is indicated in the high-level cache by using specific indication information. A cache line being in a monitored state means that the processor monitors whether a cache hit on the cache line in the high-level cache occurs. A manner for indicating that the corresponding cache line of the first cache line is in a monitored state is not limited in this embodiment of the present invention.

In an embodiment of the present invention, the processor may store an identifier of the cache line in a monitored state by using a status register, and the identifier may be a tag and an index of the cache line. After selecting the first cache line in the low-level cache as the to-be-replaced cache line, the processor writes an identifier of the first cache line into the status register (the first cache line and the corresponding cache line of the first cache line have the same identifier). The monitoring whether a cache hit on a corresponding cache line of the first cache line occurs in the high-level cache may be specifically: comparing an identifier of a hit cache line in the high-level cache with the identifier, stored in the status register, of the first cache line. If the two identifiers are the same, it indicates that the cache hit on the corresponding cache line of the first cache line occurs.

In another embodiment of the present invention, the processor records a status of a cache line by using an indication flag bit corresponding to the cache line, for example, may extend a tag field of the cache line by one bit as an indication flag. Each cache line in the high-level cache corresponds to an indication flag bit. When the indication flag bit is in a first state, it indicates that the corresponding cache line is not in a monitored state, and when the indication flag bit is in a second state, it indicates that the corresponding cache line is in a monitored state. The processor monitors only a cache line whose indication flag bit is in the second state. After selecting the first cache line in the low-level cache as the to-be-replaced cache line, the processor searches the high-level cache for the corresponding cache line of the first cache line, and sets an indication flag bit of the corresponding cache line of the first cache line to the second state. The monitoring whether a cache hit on a corresponding cache line of the first cache line occurs in the high-level cache may be specifically monitoring, by the processor, whether a hit occurs on the corresponding cache line, whose indication flag bit is in the second state, of the first cache line.

S306: If the hit on the corresponding cache line of the first cache line occurs in the high-level cache before a cache miss occurs in the low-level cache, retain the first cache line in the low-level cache, and select a second cache line as the to-be-replaced cache line.

Specifically, the processor may select a second cache line other than the first cache line as the to-be-replaced cache line according to a cache replacement algorithm. For example, the processor may select a least recently used second cache line other than the first cache line as the to-be-replaced cache line according to the LRU algorithm.

If the high-level cache includes the corresponding cache line of the first cache line, and the hit on the corresponding cache line of the first cache line occurs in the high-level cache before a cache miss occurs in the low-level cache, it indicates that the corresponding cache line of the first cache line is frequently accessed data (hot data) in the high-level cache. To avoid back invalidation of the corresponding cache line, which is hot data, of the first cache line, the processor retains the first cache line in the low-level cache, and newly selects the second cache line as the to-be-replaced cache line. Because the corresponding cache line of the first cache line is hot data in the high-level cache, the processor may update a status of the first cache line in the low-level cache to "most recently used".

Further, after the cache hit on the corresponding cache line of the first cache line occurs, the corresponding cache line of the first cache line is no longer monitored in the high-level cache. Specifically, if the identifier of the first cache line is recorded in the high-level cache by using the status register, the identifier, recorded in the status register, of the first cache line is deleted. If whether the corresponding cache line of the first cache line is in a monitored state is indicated in the high-level cache by using the indication flag bit, when the indication flag bit is in the first state, it indicates that the corresponding cache line is not in a monitored state, and when the indication flag bit is in the second state, it indicates that the corresponding cache line is in a monitored state, the indication flag bit of the corresponding cache line of the first cache line is set to the first state in the high-level cache, to stop monitoring the corresponding cache line of the first cache line.

If access to the corresponding cache line of the first cache line does not occur in the high-level cache before a cache miss occurs in the low-level cache, when the cache miss occurs in the low-level cache, the first cache line is evicted from the low-level cache, and a missing cache line is moved into the low-level cache.

Specifically, if the high-level cache includes the corresponding cache line of the first cache line, and the hit on the corresponding cache line of the first cache line does not occur in the high-level cache before a cache miss occurs in the low-level cache, the first cache line is evicted from the low-level cache when the cache miss occurs in the low-level cache. To ensure the inclusion relationship between the high-level cache and the low-level cache, the processor performs back invalidation on the corresponding cache line, in the high-level cache, of the first cache line. Further, the processor stops monitoring, in the high-level cache, the corresponding cache line of the first cache line. A specific manner has been described above, and details are not described herein again. The processor further writes a missing cache line into the low-level cache and the high-level cache.

If the high-level cache does not include the corresponding cache line of the first cache line, and the processor does not access the data of the first cache line before a subsequent cache miss occurs in the low-level cache, in other words, a cache miss on the corresponding cache line of the first cache line does not occur in the high-level cache before a subsequent cache miss occurs in the low-level cache, when the cache miss occurs in the low-level cache, the first cache line is evicted from the low-level cache, and a missing cache line is updated to the low-level cache and the high-level cache.

If the high-level cache does not include the corresponding cache line of the first cache line, and the processor accesses the data corresponding to the first cache line before a subsequent cache miss occurs in the low-level cache, in other words, an access operation on the data corresponding to the first cache line occurs in the high-level cache before a subsequent cache miss occurs in the low-level cache, because a cache miss on the corresponding cache line of the first cache line occurs in the high-level cache, the processor searches the low-level cache for the first cache line, and updates the data corresponding to the first cache line to the high-level cache. Therefore, a hit on the first cache line occurs in the low-level cache, and the processor retains the first cache line in the low-level cache, and newly selects the second cache line as the to-be-replaced cache line. This avoids back invalidation of the corresponding cache line, just updated to the high-level cache, of the first cache line. Further, the status of the first cache line may be updated to most recently used MRU in the low-level cache.

According to the technical solution disclosed in this embodiment of the present invention, after selecting the first cache line in the low-level cache as the to-be-replaced cache line, the processor monitors whether a hit on the corresponding cache line of the first cache line occurs in the high-level cache. If the hit on the corresponding cache line of the first cache line occurs, it indicates that the corresponding cache line of the first cache line is frequently accessed data (hot data) in the high-level cache. The processor retains the first cache line in the low-level cache, and newly selects the second cache line as the to-be-replaced cache line, thereby ensuring that the corresponding cache line, which is hot data, of the first cache line is not invalidated in the high-level cache due to replacement in the low-level cache, increasing a cache hit rate in the high-level cache, and improving overall system performance.

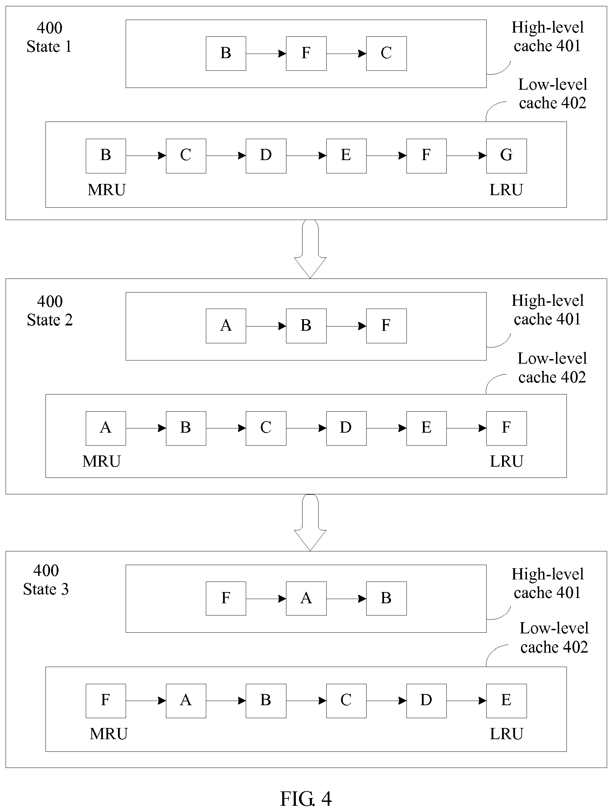

FIG. 4 is a schematic diagram of a cache status change according to an embodiment of the present invention. As shown in FIG. 4, a cache system 400 includes a high-level cache 401 and a low-level cache 402. In a state 1, the low-level cache 402 includes six cache lines B, C, D, E, F, and G, and the high-level cache 401 includes three cache lines B, F, and C. The high-level cache 401 and the low-level cache 402 are in an inclusion relationship. To be specific, the cache lines B, F, and C in the high-level cache are also in the low-level cache. The low-level cache maintains a logical LRU chain. During specific implementation, the LRU chain may be implemented by recording quantities or time of misses on the cache lines. An implementation form of the LRU chain is not limited in the present invention. In the state 1, a cache line at the end of the LRU chain is the cache line G Therefore, according to a replacement policy, the cache line G is a to-be-replaced cache line, and when a subsequent cache miss occurs in the low-level cache, the to-be-replaced cache line is replaced with a missing cache line. To be specific, when a subsequent cache miss occurs in the low-level cache 402, the cache line G is evicted from the low-level cache 402.

In the state 1, if the processor initiates access to data A, because the high-level cache 401 does not include a cache line corresponding to the data A, a cache miss on the data A occurs in the high-level cache 401, and the processor searches the low-level cache 402 to determine whether the low-level cache 402 includes the data A. Because the low-level cache 402 does not include the data A either, the cache miss on the data A also occurs in the low-level cache, and the processor obtains the data A from a lower-level cache or a memory, and updates the cache line corresponding to the data A to the low-level cache 402 and the high-level cache 401. The cache system enters a state 2.

As shown in FIG. 4, in the state 2, a cache line A is updated to the low-level cache 402 and the high-level cache 401, the to-be-replaced cache line G in the state 1 is evicted from the low-level cache 402, and the cache line C in the state 1 is evicted from the high-level cache 401. In the state 2, the newly added cache line A is at the beginning of the LRU chain, and the cache line F is at the end of the LRU chain. Therefore, in the state 2, the cache line F is the to-be-replaced cache line in the low-level cache 402.

In the state 2, after determining the cache line F in the low-level cache 402 as the to-be-replaced cache line, the processor monitors whether a hit on the cache line F occurs in the high-level cache 401. If a hit on the cache line F occurs in the high-level cache 401 before the cache line F is replaced in the low-level cache 402 because a cache miss occurs in the low-level cache 402, it indicates that the cache line F is hot data in the high-level cache 401. To avoid back invalidation of the cache line F in the high-level cache, the processor retains the cache line F in the low-level cache 402, and selects the cache line E as the to-be-replaced cache line. The cache system enters a state 3.

As shown in the figure, in the state 3, because the hit on the cache line F occurs in the high-level cache, in an updated LRU chain in the low-level cache, the cache line F is adjusted to MRU and is at the beginning of the LRU chain, and the cache line E is at the end of the LRU chain and is selected as the to-be-replaced cache line.

According to the technical solution disclosed in this embodiment of the present invention, after determining the cache line F as the to-be-replaced cache line in the low-level cache 402, the processor monitors whether the hit on the cache line F occurs in the high-level cache 401 before the cache line F is evicted from the low-level cache 402 because a cache miss occurs in the low-level cache 402. If the hit on the cache line F occurs in the high-level cache 401, it indicates that the cache line F is hot data. To avoid back invalidation of the cache line F, the processor retains the cache line F in the low-level cache 402, and newly selects the cache line E as the to-be-replaced cache line, thereby ensuring that the cache line F that is hot data stays in the high-level cache 401, increasing a cache hit rate in the high-level cache, and improving overall system performance of the processor.

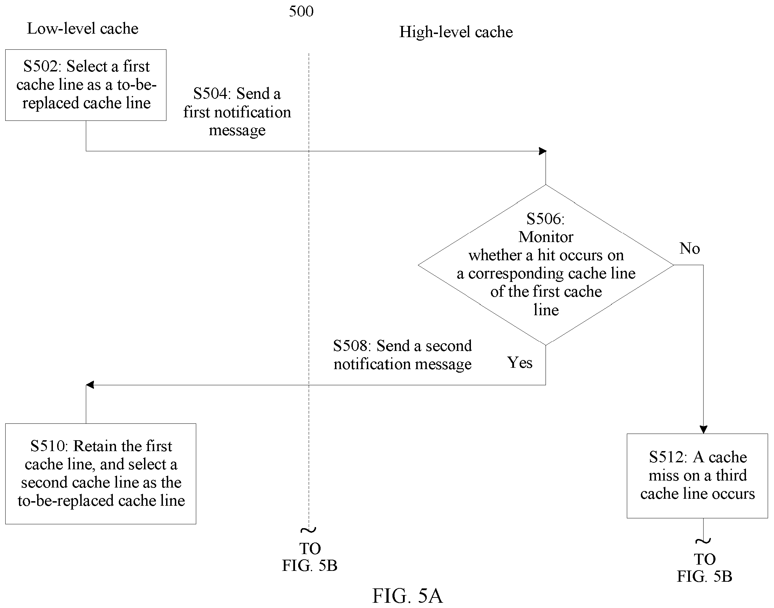

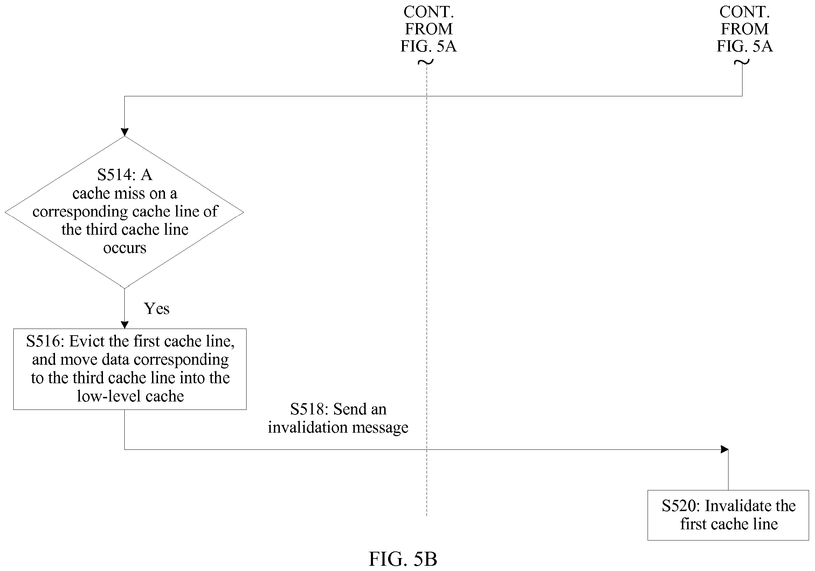

FIG. 5A and FIG. 5B are an example flowchart of a cache replacement method 500 according to an embodiment of the present invention. A cache architecture includes a low-level cache and a high-level cache, and the low-level cache and the high-level cache have respective control logic. As shown in FIG. 5A and FIG. 5B, the method 500 includes the following steps.

S502: The low-level cache selects a first cache line as a to-be-replaced cache line.

A policy for the low-level cache to select the to-be-replaced cache line has been described above, and details are not described again. For ease of description, it is assumed in this embodiment of the present invention that the low-level cache selects the first cache line as the to-be-replaced cache line according to an LRU replacement policy. When a status update occurs, a first cache line in an LRU state is determined as the first cache line.

S504: The low-level cache sends a first notification message to the high-level cache.

The first notification message is used to notify the high-level cache that the first cache line is determined by the low-level cache as the to-be-replaced cache line. The first notification message includes indication information of the first cache line. The indication information may be specifically index and tag information of the first cache line. This is not limited in this embodiment of the present invention.

During a specific implementation, the low-level cache may send the first notification message to the high-level cache when the first cache line is updated to the LRU state during the status update.

After receiving the first notification message sent by the low-level cache, the high-level cache first searches the high-level cache based on the indication information of the first cache line to determine whether the high-level cache includes a corresponding cache line of the first cache line. If the high-level cache does not include the corresponding cache line of the first cache line, the high-level cache may discard the first notification message. If the high-level cache includes the corresponding cache line of the first cache line, the high-level cache performs step S506. For ease of description, it is assumed in this embodiment of the present invention that both the high-level cache and the low-level cache include the first cache line. A case in which the low-level cache includes the first cache line but the high-level cache does not include the first cache line has been described in the embodiment of FIG. 3, and details are not described again in this embodiment of the present invention. In the following description of this embodiment of the present invention, unless otherwise stated, it is assumed that the high-level cache includes the first cache line.

S506: The high-level cache monitors whether a hit on the corresponding cache line of the first cache line occurs in the high-level cache before a cache miss occurs in the low-level cache. If the hit occurs, step S508 is performed. If no hit occurs, step S512 is performed.

During a specific implementation, the high-level cache may mark the corresponding cache line of the first cache line in a plurality of manners, to indicate that the corresponding cache line of the first cache line is in a monitored state. The high-level cache records an identifier of the first cache line (the identifier of the first cache line is the same as an identifier of the corresponding cache line of the first cache line) by using a register, or indicate the corresponding cache line of the first cache line by using a flag bit. For example, a one-bit flag bit FI may be added to a tag of a cache line, and both an initial value and a reset value of the flag bit FI are 0. After the high-level cache receives the first notification message, if the corresponding cache line of the first cache line is in the high-level cache, the high-level cache sets a flag bit FI of the corresponding cache line of the first cache line to 1, to indicate that the corresponding cache line of the first cache line is in a monitored state.

If the hit on the corresponding cache line of the first cache line occurs before the high-level cache receives a back invalidation message for the first cache line from the low-level cache, step S508 is performed. Moreover, monitoring the corresponding cache line of the first cache line is stopped. If the high-level cache records the identifier of the first cache line by using the register, the high-level cache deletes the identifier, recorded in the register, of the first cache line. If the high-level cache indicates, by using the flag bit FI, that the corresponding cache line of the first cache line is in a monitored state, the high-level cache sets the flag bit FI corresponding to the corresponding cache line of the first cache line to 0.

Specifically, if the high-level cache records the identifier of the first cache line by using the register, for each cache hit that occurs in the high-level cache, the high-level cache compares an identifier of a cache line on which the cache hit occurs with the identifier, stored in the register, of the first cache line. If the two identifiers are the same, it indicates that the hit on the corresponding cache line of the first cache line occurs. Therefore, step S508 is triggered, and the identifier, recorded in the register, of the first cache line is deleted. If the high-level cache indicates, by using the flag bit FI, that the corresponding cache line of the first cache line is in a monitored state, if a cache hit occurs in the high-level cache and a flag bit FI corresponding to a hit cache line is 1, it indicates that the hit on the corresponding cache line of the first cache line occurs. Therefore, step S508 is triggered, and the flag bit FI corresponding to the corresponding cache line of the first cache line is set to 0.

S508: The high-level cache sends a second notification message to the low-level cache.

The second notification message is used to indicate that the hit on the corresponding cache line of the first cache line occurs in the high-level cache.

S510: The low-level cache retains the first cache line, and selects a second cache line as the to-be-replaced cache line.

Because the hit on the corresponding cache line of the first cache line occurs in the high-level cache, according to time and space characteristics of cache access, it indicates that the corresponding cache line of the first cache line is hot data in the high-level cache. To avoid back invalidation, in the high-level cache, of the corresponding cache line of the first cache line, the low-level cache retains the first cache line, and newly selects the to-be-replaced cache line.

Further, the low-level cache may update a status of the first cache line to MRU. After the status is updated, the second cache line in the LRU state is determined as the to-be-replaced cache line. It should be understood that, this embodiment of the present invention is merely described by using the LRU policy as an example, and a cache algorithm for selecting the second cache line as the to-be-replaced cache line is not limited in this embodiment of the present invention.

S512: A cache miss on a third cache line occurs in the high-level cache.

Because the high-level cache has a smaller space and is closer to a processor core, cache line replacement occurs more frequently, and after the high-level cache receives the first notification message, a cache miss occurs soon in the high-level cache. After the cache miss on the third cache line occurs in the high-level cache, the high-level cache searches the low-level cache to determine whether the low-level cache includes a corresponding cache line of the third cache line.

S514: The low-level cache determines whether a cache miss occurs on the corresponding cache line of the third cache line.

If the low-level cache includes the corresponding cache line of the third cache line, data of the corresponding cache line of the third cache line may be directly updated to the high-level cache. Because no cache miss occurs in the low-level cache, the first cache line serving as the to-be-replaced cache line is not evicted from the low-level cache.

If the low-level cache does not include the corresponding cache line of the third cache line, the cache miss on the corresponding cache line of the third cache line occurs in the low-level cache, and the low-level cache needs to obtain, from a lower-level cache or a memory, the data corresponding to the third cache line, and perform step S516.

S516: The low-level cache evicts the first cache line, and moves data corresponding to the third cache line into the low-level cache.

Because the cache miss on the corresponding cache line of the third cache line occurs, after obtaining, from the lower-level cache or the memory, the data corresponding to the third cache line, the low-level cache replaces the current to-be-replaced cache line (the first cache line) with the data corresponding to the third cache line, and writes the data corresponding to the third cache line into the high-level cache.

S518: The low-level cache sends an invalidation message to the high-level cache.

To ensure an inclusion relationship, after evicting the first cache line, the low-level cache needs to send the invalidation message for the corresponding cache line of the first cache line to the high-level cache, to invalidate the corresponding cache line, in the high-level cache, of the first cache line. The invalidation message may carry identification information of the first cache line, and the identification information may be the index and tag information of the first cache line.

S520: The high-level cache invalidates the corresponding cache line of the first cache line.

After receiving the invalidation message for the corresponding cache line of the first cache line, the high-level cache invalidates the corresponding cache line of the first cache line. Specifically, the high-level cache may search for the corresponding cache line of the first cache line based on the identifier, carried in the invalidation message, of the first cache line, and if the corresponding cache line of the first cache line is found, mark the corresponding cache line of the first cache line as invalid. Further, the high-level cache stops monitoring the corresponding cache line of the first cache line.

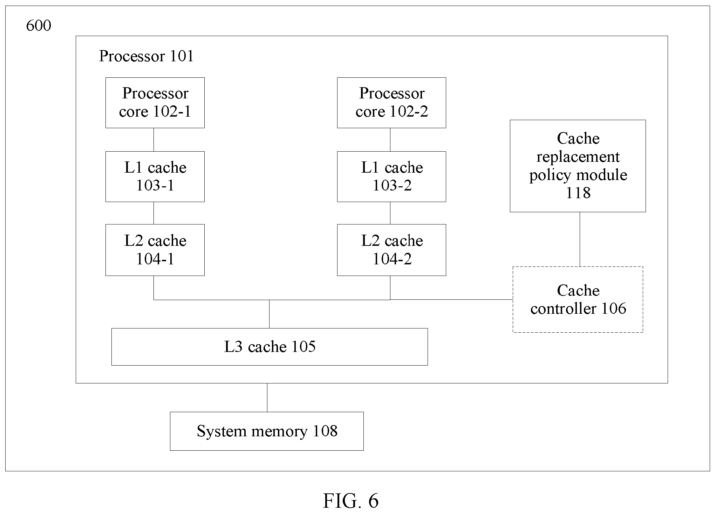

FIG. 6 is a schematic diagram of a logical structure of a cache replacement system 600 according to an embodiment of the present invention. As shown in FIG. 6, the system 600 includes a processor 101. The processor 101 includes a three-level cache architecture and two processor cores: a processor core 102-1 and a processor core 102-2. An L1 cache 103-1 and an L2 cache 104-1 are private caches of the processor core 102-1. An L1 cache 103-2 and an L2 cache 104-2 are private caches of the processor core 102-2. An L3 cache 105 is a cache shared between the processor core 102-1 and the processor core 102-2. The processor 101 is interconnected with a system memory subsystem 108.

It should be understood that, the system 600 is merely an example for description, and a cache replacement policy in the embodiments of the present invention is applicable to a data processing system including an architecture with more levels (greater than three levels) of caches, and also applicable to a data processing system including a two-level cache architecture.

The processor 101 further includes a cache replacement policy module 118, and the cache replacement policy module 118 is firmware integrated into the processor 101.

Further, the processor 101 may further include a cache controller 106.

When the processor 101 or the cache controller 106 executes the cache replacement policy module 118, the method described in any one of embodiments of FIG. 3 to FIG. 5B in the embodiments of the present invention is performed. A specific procedure has been described above, and details are not described herein again.

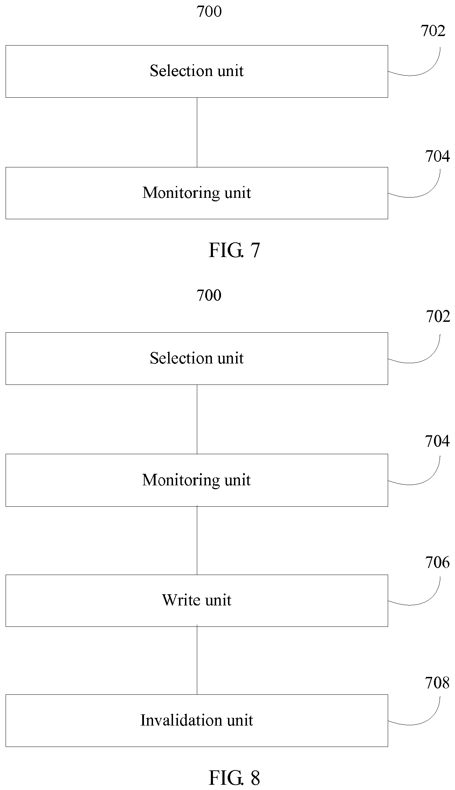

FIG. 7 is a schematic diagram of a logical structure of a cache replacement apparatus 700 according to an embodiment of the present invention. The apparatus 700 is applied to a computer system. The computer system includes a high-level cache and a low-level cache. The low-level cache and the high-level cache are in an inclusion relationship. As shown in FIG. 7, the apparatus 700 includes a selection unit 702 and a monitoring unit 704.

The selection unit 702 is configured to select a first cache line in the low-level cache as a to-be-replaced cache line. The to-be-replaced cache line is evicted from the low-level cache when a cache miss occurs in the low-level cache.

The monitoring unit 704 is configured to monitor whether a hit on a corresponding cache line of the first cache line occurs in the high-level cache. If the hit on the corresponding cache line of the first cache line occurs in the high-level cache before a cache miss occurs in the low-level cache, the selection unit 702 is further configured to retain the first cache line in the low-level cache, and select a second cache line as the to-be-replaced cache line.

As shown in FIG. 8, the apparatus 700 may further include a write unit 706 and an invalidation unit 708.

The high-level cache is associated with a status register, and the status register is configured to store an identifier of a cache line in a monitored state. After the selection unit 702 selects the first cache line in the low-level cache as the to-be-replaced cache line, the write unit 706 is configured to write an identifier of the first cache line into the status register. The monitoring unit 704 is configured to compare an identifier of a hit cache line in the high-level cache with the identifier, stored in the status register, of the first cache line. If the two identifiers are the same, it indicates that the hit on the corresponding cache line of the first cache line occurs.

Optionally, each cache line in the high-level cache corresponds to an indication flag bit, when the indication flag bit is in a first state, it indicates that the corresponding cache line is not in a monitored state, and when the indication flag bit is in a second state, it indicates that the corresponding cache line is in a monitored state. After the selection unit 702 selects the first cache line in the low-level cache as the to-be-replaced cache line, the monitoring unit 704 is further configured to: search the high-level cache for the corresponding cache line of the first cache line, and set an indication flag bit corresponding to the corresponding cache line of the first cache line to the second state.

If access to the corresponding cache line of the first cache line does not occur in the high-level cache before a cache miss occurs in the low-level cache, when the cache miss occurs in the low-level cache, the write unit 706 is further configured to: evict the first cache line from the low-level cache, and move a missing cache line into the low-level cache. After the write unit 706 evicts the first cache line from the low-level cache, the invalidation unit 708 is configured to perform back invalidation on the corresponding cache line, in the high-level cache, of the first cache line.

Optionally, the selection unit 702 is configured to select the first cache line in the low-level cache as the to-be-replaced cache line according to a least recently used LRU policy. If the hit on the corresponding cache line of the first cache line occurs in the high-level cache before a cache miss occurs in the low-level cache, the selection unit 702 is further configured to update a status of the first cache line in the low-level cache to "most recently used MRU".

In this embodiment of the present invention, the selection unit 702, the monitoring unit 704, the write unit 706, and the invalidation unit 708 may be specifically implemented by the processor 101 by executing code in the cache replacement policy module 118.

This embodiment of the present invention is an apparatus embodiment corresponding to the method embodiments of FIG. 3 to FIG. 6, descriptions of features in the embodiment parts of FIG. 3 to FIG. 6 are applicable to this embodiment of the present invention, and details are not described herein again.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make replacements to some technical features thereof, without departing from the protection scope of the claims.

## Claims

1. A cache replacement method in a computer, wherein the computer comprises a high-level cache and a low-level cache, the low-level cache and the high-level cache are in an inclusion relationship, and the method comprises:
selecting (S302) a first cache line in the low-level cache as a to-be-replaced cache line, wherein the to-be-replaced cache line is evicted from the low-level cache when a cache miss occurs in the low-level cache;
monitoring (S304) whether a hit on a corresponding cache line of the first cache line occurs in the high-level cache; and
if the hit on the corresponding cache line of the first cache line occurs in the high-level cache before a cache miss occurs in the low-level cache, retaining the first cache line in the low-level cache, and selecting a second cache line as the to-be-replaced cache line (S306),
wherein the high-level cache is associated with a status register, and the status register is configured to store an identifier of a cache line in a monitored state;
after the selecting a first cache line in the low-level cache as a to-be-replaced cache line, the method further comprises writing an identifier of the first cache line into the status register; and
the monitoring whether a hit on a corresponding cache line of the first cache line occurs in the high-level cache comprises: comparing an identifier of a hit cache line in the high-level cache with the identifier, stored in the status register, of the first cache line, wherein if the two identifiers are the same, it indicates that the hit on the corresponding cache line of the first cache line occurs.

2. The method according to claim 1, wherein each cache line in the high-level cache corresponds to an indication flag bit, when the indication flag bit is in a first state, it indicates that the corresponding cache line is not in a monitored state, and when the indication flag bit is in a second state, it indicates that the corresponding cache line is in a monitored state; and
after the selecting a first cache line in the low-level cache as a to-be-replaced cache line, the method further comprises: searching the high-level cache for the corresponding cache line of the first cache line, and setting an indication flag bit corresponding to the corresponding cache line of the first cache line to the second state.

3. The method according to any one of claims 1 tor 2, wherein the method further comprises: if access to the corresponding cache line of the first cache line does not occur in the high-level cache before a cache miss occurs in the low-level cache, evicting the first cache line from the low-level cache when the cache miss occurs in the low-level cache.

4. The method according to claim 3, wherein after the evicting the first cache line from the low-level cache, the method further comprises:
invalidating the corresponding cache line, in the high-level cache, of the first cache line.

5. The method according to any one of claims 1 to 4, wherein the selecting a first cache line in the low-level cache as a to-be-replaced cache line comprises:
selecting the first cache line in the low-level cache as the to-be-replaced cache line according to a least recently used, LRU policy.

6. The method according to claim 5, wherein if the hit on the corresponding cache line of the first cache line occurs in the high-level cache before a cache miss occurs in the low-level cache, the method further comprises updating a status of the first cache line in the low-level cache to "most recently used, MRU".

7. A cache replacement apparatus in a computer, wherein the computer comprises a high-level cache and a low-level cache, the low-level cache and the high-level cache are in an inclusion relationship, and the apparatus comprises:
a selection unit (702), configured to select a first cache line in the low-level cache as a to-be-replaced cache line, wherein the to-be-replaced cache line is evicted from the low-level cache when a cache miss occurs in the low-level cache; and
a monitoring unit (704), configured to monitor whether a hit on a corresponding cache line of the first cache line occurs in the high-level cache; wherein
if the hit on the corresponding cache line of the first cache line occurs in the high-level cache before a cache miss occurs in the low-level cache, the selection unit is further configured to retain the first cache line in the low-level cache, and select a second cache line as the to-be-replaced cache line, wherein the high-level cache is associated with a status register, and the status register is configured to store an identifier of a cache line in a monitored state;
the apparatus further comprises a write unit (706), and after the selection unit selects the first cache line in the low-level cache as the to-be-replaced cache line, the write unit is configured to write an identifier of the first cache line into the status register; and
the monitoring unit is configured to compare an identifier of a hit cache line in the high-level cache with the identifier, stored in the status register, of the first cache line, wherein if the two identifiers are the same, it indicates that the hit on the corresponding cache line of the first cache line occurs.

8. The apparatus according to claim 7, wherein each cache line in the high-level cache corresponds to an indication flag bit, when the indication flag bit is in a first state, it indicates that the corresponding cache line is not in a monitored state, and when the indication flag bit is in a second state, it indicates that the corresponding cache line is in a monitored state; and
after the selection unit selects the first cache line in the low-level cache as the to-be-replaced cache line, the monitoring unit is further configured to: search the high-level cache for the corresponding cache line of the first cache line, and set an indication flag bit corresponding to the corresponding cache line of the first cache line to the second state.

9. The apparatus according to claim 7 or 8, wherein the apparatus further comprises a write unit; and
if access to the corresponding cache line of the first cache line does not occur in the high-level cache before a cache miss occurs in the low-level cache, the write unit is further configured to evict the first cache line from the low-level cache when the cache miss occurs in the low-level cache.

10. The apparatus according to claim 9, wherein the apparatus further comprises an invalidation unit, and after the write unit evicts the first cache line from the low-level cache, the invalidation unit is configured to invalidate the corresponding cache line, in the high-level cache, of the first cache line.

11. The apparatus according to any one of claims 7 to 10, wherein the selection unit is configured to select the first cache line in the low-level cache as the to-be-replaced cache line according to a least recently used LRU, policy.

12. The apparatus according to claim 11, wherein if the hit on the corresponding cache line of the first cache line occurs in the high-level cache before a cache miss occurs in the low-level cache, the selection unit is further configured to update a status of the first cache line in the low-level cache to "most recently used, MRU".

13. A system for cache replacement, wherein the system comprises a high-level cache, a low-level cache, and a cache controller, and the low-level cache and the high-level cache are in an inclusion relationship;
wherein the cache controller performs the method according to any one of the claims 1 to 6.

## Patentansprüche

1. Cache-Ersetzungsverfahren in einem Computer, wobei der Computer einen High-Level-Cache und einen Low-Level-Cache umfasst, wobei der Low-Level-Cache und der High-Level-Cache in einer Inklusionsbeziehung stehen und das Verfahren Folgendes umfasst:
Auswählen (S302) einer ersten Cache-Zeile im Low-Level-Cache als eine zu ersetzende Cache-Zeile, wobei die zu ersetzende Cache-Zeile aus dem Low-Level-Cache verdrängt wird, wenn ein Cache-Fehltreffer im Low-Level-Cache auftritt;
Überwachen (S304), ob ein Treffer auf einer entsprechenden Cache-Zeile der ersten Cache-Zeile im High-Level-Cache auftritt; und
wenn der Treffer auf der entsprechenden Cache-Zeile der ersten Cache-Zeile im High-Level-Cache auftritt, bevor ein Cache-Fehltreffer im Low-Level-Cache auftritt, Beibehalten der ersten Cache-Zeile im Low-Level-Cache und Auswählen einer zweiten Cache-Zeile als die zu ersetzende Cache-Zeile (S306),
wobei der High-Level-Cache einem Statusregister zugeordnet ist und das Statusregister dafür ausgelegt ist, eine Kennung einer Cache-Zeile in einem überwachten Zustand zu speichern;
wobei das Verfahren nach dem Auswählen einer ersten Cache-Zeile im Low-Level-Cache als eine zu ersetzende Cache-Zeile ferner das Schreiben einer Kennung der ersten Cache-Zeile in das Statusregister umfasst; und
wobei das Überwachen, ob ein Treffer auf einer entsprechenden Cache-Zeile der ersten Cache-Zeile im High-Level-Cache auftritt, Folgendes umfasst: Vergleichen einer Kennung einer Treffer-Cache-Zeile im High-Level-Cache mit der im Statusregister gespeicherten Kennung der ersten Cache-Zeile, wobei, wenn die zwei Kennungen gleich sind, dies anzeigt, dass der Treffer auf der entsprechenden Cache-Zeile der ersten Cache-Zeile auftritt.

2. Verfahren nach Anspruch 1, wobei jede Cache-Zeile im High-Level-Cache einem Anzeige-Flag-Bit entspricht, das, wenn es sich in einem ersten Zustand befindet, anzeigt, dass sich die entsprechende Cache-Zeile nicht in einem überwachten Zustand befindet, und das, wenn es sich in einem zweiten Zustand befindet, anzeigt, dass sich die entsprechende Cache-Zeile in einem überwachten Zustand befindet; und
wobei das Verfahren nach dem Auswählen einer ersten Cache-Zeile im Low-Level-Cache als eine zu ersetzende Cache-Zeile ferner Folgendes umfasst: Durchsuchen des High-Level-Caches nach der entsprechenden Cache-Zeile der ersten Cache-Zeile, und Versetzen eines Anzeige-Flag-Bits, das der entsprechenden Cache-Zeile der ersten Cache-Zeile entspricht, in den zweiten Zustand.

3. Verfahren nach einem der Ansprüche 1 oder 2, wobei das Verfahren ferner Folgendes umfasst: wenn der Zugriff auf die entsprechende Cache-Zeile der ersten Cache-Zeile im High-Level-Cache nicht erfolgt, bevor ein Cache-Fehltreffer im Low-Level-Cache auftritt, Verdrängen der ersten Cache-Zeile aus dem Low-Level-Cache, wenn der Cache-Fehltreffer im Low-Level-Cache auftritt.

4. Verfahren nach Anspruch 3, wobei nach dem Verdrängen der ersten Cache-Zeile aus dem Low-Level-Cache das Verfahren ferner Folgendes umfasst:
Ungültigmachen der entsprechenden Cache-Zeile der ersten Cache-Zeile im High-Level-Cache.

5. Verfahren nach einem der Ansprüche 1 bis 4, wobei das Auswählen einer ersten Cache-Zeile im Low-Level-Cache als eine zu ersetzende Cache-Zeile Folgendes umfasst:
Auswählen der ersten Cache-Zeile im Low-Level-Cache als die zu ersetzende Cache-Zeile gemäß einer "Least Recently Used"-, LRU-, Richtlinie.

6. Verfahren nach Anspruch 5, wobei, wenn der Treffer auf der entsprechenden Cache-Zeile der ersten Cache-Zeile im High-Level-Cache auftritt, bevor ein Cache-Fehltreffer im Low-Level-Cache auftritt, das Verfahren ferner das Aktualisieren eines Status der ersten Cache-Zeile im Low-Level-Cache zu "Most Recently Used", MRU, umfasst.

7. Cache-Ersetzungsvorrichtung in einem Computer, wobei der Computer einen High-Level-Cache und einen Low-Level-Cache umfasst, wobei der Low-Level-Cache und der High-Level-Cache in einer Inklusionsbeziehung stehen und die Vorrichtung Folgendes umfasst:
eine Auswahleinheit (702), die dafür ausgelegt ist, eine erste Cache-Zeile im Low-Level-Cache als eine zu ersetzende Cache-Zeile auszuwählen, wobei die zu ersetzende Cache-Zeile aus dem Low-Level-Cache verdrängt wird, wenn ein Cache-Fehltreffer im Low-Level-Cache auftritt; und
eine Überwachungseinheit (704), die dafür ausgelegt ist, zu überwachen, ob ein Treffer auf einer entsprechenden Cache-Zeile der ersten Cache-Zeile im High-Level-Cache auftritt; wobei
wenn der Treffer auf der entsprechenden Cache-Zeile der ersten Cache-Zeile im High-Level-Cache auftritt, bevor ein Cache-Fehltreffer im Low-Level-Cache auftritt, die Auswahleinheit ferner dafür ausgelegt ist, die erste Cache-Zeile im Low-Level-Cache beizubehalten und eine zweite Cache-Zeile als die zu ersetzende Cache-Zeile auszuwählen, wobei der High-Level-Cache einem Statusregister zugeordnet ist und das Statusregister dafür ausgelegt ist, eine Kennung einer Cache-Zeile in einem überwachten Zustand zu speichern;
die Vorrichtung ferner eine Schreibeinheit (706) umfasst, und die Schreibeinheit, nachdem die Auswahleinheit die erste Cache-Zeile im Low-Level-Cache als die zu ersetzende Cache-Zeile ausgewählt hat, dafür ausgelegt ist, eine Kennung der ersten Cache-Zeile in das Statusregister zu schreiben; und
die Überwachungseinheit dafür ausgelegt ist, eine Kennung einer Treffer-Cache-Zeile im High-Level-Cache mit der im Statusregister gespeicherten Kennung der ersten Cache-Zeile zu vergleichen, wobei, wenn die zwei Kennungen gleich sind, dies anzeigt, dass der Treffer auf der entsprechenden Cache-Zeile der ersten Cache-Zeile auftritt.

8. Vorrichtung nach Anspruch 7, wobei jede Cache-Zeile im High-Level-Cache einem Anzeige-Flag-Bit entspricht, das, wenn es sich in einem ersten Zustand befindet, anzeigt, dass sich die entsprechende Cache-Zeile nicht in einem überwachten Zustand befindet, und das, wenn es sich in einem zweiten Zustand befindet, anzeigt, dass sich die entsprechende Cache-Zeile in einem überwachten Zustand befindet; und
wobei die Überwachungseinheit, nachdem die Auswahleinheit die erste Cache-Zeile im Low-Level-Cache als die zu ersetzende Cache-Zeile ausgewählt hat, ferner für folgende Vorgänge ausgelegt ist: Durchsuchen des High-Level-Cache nach der entsprechenden Cache-Zeile der ersten Cache-Zeile und Versetzen eines Anzeige-Flag-Bits, das der entsprechenden Cache-Zeile der ersten Cache-Zeile entspricht, in den zweiten Zustand.

9. Vorrichtung nach Anspruch 7 oder 8, wobei die Vorrichtung ferner eine Schreibeinheit umfasst; und
wenn der Zugriff auf die entsprechende Cache-Zeile der ersten Cache-Zeile im High-Level-Cache nicht erfolgt, bevor ein Cache-Fehltreffer im Low-Level-Cache auftritt, die Schreibeinheit ferner dafür ausgelegt ist, die erste Cache-Zeile aus dem Low-Level-Cache zu verdrängen, wenn der Cache-Fehltreffer im Low-Level-Cache auftritt.

10. Vorrichtung nach Anspruch 9, wobei die Vorrichtung ferner eine Ungültigmachungseinheit umfasst und die Ungültigmachungseinheit, nachdem die Schreibeinheit die erste Cache-Zeile aus dem Low-Level-Cache verdrängt hat, dafür ausgelegt ist, die entsprechende Cache-Zeile der ersten Cache-Zeile im High-Level-Cache ungültig zu machen.

11. Vorrichtung nach einem der Ansprüche 7 bis 10, wobei die Auswahleinheit dafür ausgelegt ist, die erste Cache-Zeile im Low-Level-Cache als die zu ersetzende Cache-Zeile gemäß einer "Least Recently Used"-, LRU-, Richtlinie auszuwählen.

12. Vorrichtung nach Anspruch 11, wobei, wenn der Treffer auf der entsprechenden Cache-Zeile der ersten Cache-Zeile im High-Level-Cache auftritt, bevor ein Cache-Fehltreffer im Low-Level-Cache auftritt, die Auswahleinheit ferner dafür ausgelegt ist, einen Status der ersten Cache-Zeile im Low-Level-Cache auf "Most Recently Used", MRU, zu aktualisieren.

13. System für Cache-Ersetzung, wobei das System einen High-Level-Cache, einen Low-Level-Cache und eine Cache-Steuerung umfasst und der Low-Level-Cache und der High-Level-Cache in einer Inklusionsbeziehung stehen;
wobei die Cache-Steuerung das Verfahren nach einem der Ansprüche 1 bis 6 durchführt.

## Revendications

1. Procédé de remplacement d'antémémoire dans un ordinateur, dans lequel l'ordinateur comprend une antémémoire de haut niveau et une antémémoire de bas niveau, l'antémémoire de bas niveau et l'antémémoire de haut niveau sont dans une relation d'inclusion, et le procédé comprend :
la sélection (S302) d'une première ligne d'antémémoire dans l'antémémoire de bas niveau en tant que ligne d'antémémoire à remplacer,
dans lequel la ligne d'antémémoire à remplacer est évincée de l'antémémoire de bas niveau lorsqu'une requête non satisfaite d'antémémoire se produit dans l'antémémoire de bas niveau ;
la surveillance (S304) pour établir si une requête satisfaite sur une ligne d'antémémoire correspondante de la première ligne d'antémémoire se produit dans l'antémémoire de haut niveau ; et
si la requête satisfaite sur la ligne d'antémémoire correspondante de la première ligne d'antémémoire se produit dans l'antémémoire de haut niveau avant qu'une requête non satisfaite d'antémémoire ne se produise dans l'antémémoire de bas niveau, la conservation de la première ligne d'antémémoire dans l'antémémoire de bas niveau, et la sélection d'une seconde ligne d'antémémoire comme ligne d'antémémoire à remplacer (S306),
dans lequel l'antémémoire de haut niveau est associée à un registre d'état, et le registre d'état est configuré pour stocker un identifiant d'une ligne d'antémémoire dans un état surveillé ;
après la sélection d'une première ligne d'antémémoire dans l'antémémoire de bas niveau comme ligne d'antémémoire à remplacer, le procédé comprend en outre l'écriture d'un identifiant de la première ligne d'antémémoire dans le registre d'état ; et
la surveillance pour établir si une requête satisfaite sur une ligne d'antémémoire correspondante de la première ligne d'antémémoire dans l'antémémoire de haut niveau comprend : la comparaison d'un identifiant d'une ligne d'antémémoire de requête satisfaite dans l'antémémoire de haut niveau avec l'identifiant, stocké dans le registre d'état, de la première ligne d'antémémoire, dans lequel si les deux identifiants sont identiques, cela indique que la requête satisfaite sur la ligne d'antémémoire correspondante de la première ligne d'antémémoire se produit.

2. Procédé selon la revendication 1, dans lequel chaque ligne d'antémémoire dans l'antémémoire de haut niveau correspond à un bit indicateur d'indication, lorsque le bit indicateur d'indication est dans un premier état, il indique que la ligne d'antémémoire correspondante n'est pas dans un état surveillé, et lorsque le bit indicateur d'indication est dans un second état, il indique que la ligne d'antémémoire correspondante est dans un état surveillé ; et
après la sélection d'une première ligne d'antémémoire dans l'antémémoire de bas niveau comme ligne d'antémémoire à remplacer, le procédé comprend en outre : la recherche dans l'antémémoire de haut niveau de la ligne d'antémémoire correspondante de la première ligne d'antémémoire, et la définition d'un bit indicateur d'indication correspondant à la ligne d'antémémoire correspondante de la première ligne d'antémémoire sur le second état.

3. Procédé selon l'une quelconque des revendications 1 à 2, dans lequel le procédé comprend en outre : si l'accès à la ligne d'antémémoire correspondante de la première ligne d'antémémoire ne se produit pas dans l'antémémoire de haut niveau avant qu'une requête non satisfaite d'antémémoire ne se produise dans l'antémémoire de bas niveau, l'éviction de la première ligne d'antémémoire de l'antémémoire de bas niveau lorsque la requête non satisfaite d'antémémoire se produit dans l'antémémoire de bas niveau.

4. Procédé selon la revendication 3, dans lequel après l'éviction de la première ligne d'antémémoire de l'antémémoire de bas niveau, le procédé comprend en outre :
l'invalidation de la ligne d'antémémoire correspondante, dans l'antémémoire de haut niveau, de la première ligne d'antémémoire.

5. Procédé selon l'une quelconque des revendications 1 à 4, dans lequel la sélection d'une première ligne d'antémémoire dans l'antémémoire de bas niveau en tant que ligne d'antémémoire à remplacer comprend :
la sélection de la première ligne d'antémémoire dans l'antémémoire de bas niveau en tant que ligne d'antémémoire à remplacer selon une politique LRU (la moins récemment utilisée).

6. Procédé selon la revendication 5, dans lequel si la requête satisfaite sur la ligne d'antémémoire correspondante de la première ligne d'antémémoire se produit dans l'antémémoire de haut niveau avant qu'une requête non satisfaite d'antémémoire ne se produise dans l'antémémoire de bas niveau, le procédé comprend en outre la mise à jour d'un état de la première ligne d'antémémoire dans l'antémémoire de bas niveau sur « la plus récemment utilisée, MRU ».

7. Appareil de remplacement d'antémémoire dans un ordinateur, dans lequel l'ordinateur comprend une antémémoire de haut niveau et une antémémoire de bas niveau, l'antémémoire de bas niveau et l'antémémoire de haut niveau sont dans une relation d'inclusion, et l'appareil comprend :
une unité de sélection (702) configurée pour sélectionner une première ligne d'antémémoire dans l'antémémoire de bas niveau en tant que ligne d'antémémoire à remplacer, dans laquelle la ligne d'antémémoire à remplacer est évincée de l'antémémoire de bas niveau lorsqu'une requête non satisfaite d'antémémoire se produit dans l'antémémoire de bas niveau ; et
une unité de surveillance (704), configurée pour surveiller si une requête satisfaite sur une ligne d'antémémoire correspondante de la première ligne d'antémémoire se produit dans l'antémémoire de haut niveau ; dans lequel
si la requête satisfaite sur la ligne d'antémémoire correspondante de la première ligne d'antémémoire se produit dans l'antémémoire de haut niveau avant qu'une requête insatisfaite d'antémémoire ne se produise dans l'antémémoire de bas niveau, l'unité de sélection est en outre configurée pour conserver la première ligne d'antémémoire dans l'antémémoire de bas niveau, et sélectionner une seconde ligne d'antémémoire en tant que ligne d'antémémoire à remplacer, dans lequel l'antémémoire de haut niveau est associée à un registre d'état, et le registre d'état est configuré pour stocker un identifiant d'une ligne d'antémémoire dans un état surveillé ;
l'appareil comprend en outre une unité d'écriture (706),
et après que l'unité de sélection a sélectionné la première ligne d'antémémoire dans l'antémémoire de bas niveau comme étant la ligne d'antémémoire à remplacer, l'unité d'écriture est configurée pour écrire un identifiant de la première ligne d'antémémoire dans le registre d'état ; et
l'unité de surveillance est configurée pour comparer un identifiant d'une ligne d'antémémoire de requête satisfaite dans l'antémémoire de haut niveau avec l'identifiant, stocké dans le registre d'état, de la première ligne d'antémémoire, dans lequel si les deux identifiants sont les mêmes, cela indique que la requête satisfaite sur la ligne d'antémémoire correspondante de la première ligne d'antémémoire se produit.

8. Appareil selon la revendication 7, dans lequel chaque ligne d'antémémoire dans l'antémémoire de haut niveau correspond à un bit indicateur d'indication, lorsque le bit indicateur d'indication est dans un premier état, il indique que la ligne d'antémémoire correspondante n'est pas dans un état surveillé, et lorsque le bit indicateur d'indication est dans un second état, cela indique que la ligne d'antémémoire correspondante est dans un état surveillé ; et
après que l'unité de sélection a sélectionné la première ligne d'antémémoire dans l'antémémoire de bas niveau en tant que ligne d'antémémoire à remplacer, l'unité de surveillance est en outre configurée pour : rechercher dans l'antémémoire de haut niveau la ligne d'antémémoire correspondante de la première ligne d'antémémoire, et définir un bit indicateur d'indication correspondant à la ligne d'antémémoire correspondante de la première ligne d'antémémoire sur le second état.

9. Appareil selon la revendication 7 ou 8, dans lequel l'appareil comprend en outre une unité d'écriture ; et
si l'accès à la ligne d'antémémoire correspondante de la première ligne d'antémémoire ne se produit pas dans l'antémémoire de haut niveau avant qu'une requête non satisfaite d'antémémoire ne se produise dans l'antémémoire de bas niveau, l'unité d'écriture est en outre configurée pour évincer la première ligne d'antémémoire de l'antémémoire de bas niveau lorsque la requête non satisfaite d'antémémoire se produit dans l'antémémoire de bas niveau.

10. Appareil selon la revendication 9, dans lequel l'appareil comprend en outre une unité d'invalidation, et après que l'unité d'écriture a évincé la première ligne d'antémémoire de l'antémémoire de bas niveau, l'unité d'invalidation est configurée pour invalider la ligne d'antémémoire correspondante, dans l'antémémoire de haut niveau, de la première ligne d'antémémoire.

11. Appareil selon l'une quelconque des revendications 7 à 10, dans lequel l'unité de sélection est configurée pour sélectionner la première ligne d'antémémoire dans l'antémémoire de bas niveau en tant que ligne d'antémémoire à remplacer selon une politique de la moins récemment utilisée (LRU).

12. Appareil selon la revendication 11, dans lequel si la requête satisfaite sur la ligne d'antémémoire correspondante de la première ligne d'antémémoire se produit dans l'antémémoire de haut niveau avant qu'une requête non satisfaite d'antémémoire ne se produise dans l'antémémoire de bas niveau, l'unité de sélection est en outre configurée pour mettre à jour un état de la première ligne d'antémémoire dans l'antémémoire de bas niveau sur « le plus récemment utilisé, MRU ».

13. Système de remplacement d'antémémoire, dans lequel le système comprend une antémémoire de haut niveau, une antémémoire de bas niveau et un dispositif de commande d'antémémoire, et l'antémémoire de bas niveau et l'antémémoire de haut niveau sont en relation d'inclusion ;
dans lequel le dispositif de commande d'antémémoire exécute le procédé selon l'une quelconque des revendications 1 à 6.
